Europäisches Patentamt

**European Patent Office**

Office européen des brevets

(11) Publication number: **0 223 495**
**A1**

# (12) EUROPEAN PATENT APPLICATION

(21) Application number: **86308599.9**

(22) Date of filing: **04.11.86**

(51) Int. Cl.⁴: **F 16 L 37/08**

(30) Priority: **04.11.85 ZA 858458**

(43) Date of publication of application: **27.05.87**
**Bulletin 87/22**

(84) Designated Contracting States: **AT BE CH DE ES FR GB GR IT LI LU NL SE**

(71) Applicant: **ORBIJET HOLDINGS (PROPRIETARY) LIMITED, Corner Pam and McAlpine Streets Malvern East, Germiston Transvaal Province (ZA)**

(72) Inventor: **Brooks, David Alan, P.O. Box 28428, Kensington 2101 Transvaal Province (ZA)**

(74) Representative: **McCallum, William Potter et al, Cruikshank & Fairweather 19 Royal Exchange Square, Glasgow G1 3AE Scotland (GB)**

(54) **Hose coupling.**

(57) A coupling arrangement for coupling lengths of hose together has a spigot element (16) that is substantially circular cylindrical and has a plurality of circumferentially spaced lugs (18). The element (16) is received in a socket member (14) which is slightly larger than the spigot element (16) for the spigot element (16) to be a snug fit therein. The socket member (14) has a plurality of apertures (20) that are circumferentially spaced and configured to receive the lugs (18). The spigot element (16) is of a resiliently deformable material so that it may be pushed into the socket member (14) with the lugs (18) clipping into the apertures (20). The lugs (20) are tapered to facilitate insertion, and the spigot element (16) has a peripheral bead (17) at its end to promote sealing. A hose system then comprises a number of lengths (12) of hose, each having a spigot element (16) at both ends and a number of tubular connectors (10), each having a socket member (14) at both ends.

ACTORUM AG

0223495

HOSE COUPLING

THIS INVENTION relates to the coupling of hoses and to a hose system. In particular the invention relates to flexible hoses for use with automatic swimming pool cleaners.

According to the invention there is provided a coupling arrangement for coupling hoses, which includes

a spigot-like element that is substantially circular cylindrical and has a plurality of circumferentially spaced, radially outwardly projecting clipping formations, with the spigot-like element having a mouth at its free end and with each clipping formation having at its inner end a ledge which faces away from the mouth; and

a socket-like member in which the spigot-like element is receivable and which has an internal circular cylindrical configuration slightly larger than the outer diameter of the spigot-like formation so that the spigot-like formation is a snug fit therein, with the socket-like member having a plurality of recesses in its inner surface in which the clipping formations are receivable, there being a recess for each clipping formation and with each recess defining a shoulder against which the ledge of the associated clipping formation bears;

with the spigot-like element being of a suitably resiliently flexible material for the spigot-like element to be a clip-fit in the socket-like member such that the clipping formations seat in the recesses.

Further according to the invention there is provided a hose system which includes

a number of lengths of hose, each length having a spigot-like element at both ends with each element having a plurality of circumferentially spaced, radially outwardly projecting clipping formations;

a number of connectors, each connector being tubular and having a socket-like end portion at its ends, each end portion being slightly larger than the spigot-like elements so that they are a snug fit therein, and each end portion having the same number of recesses as the number of clipping formations and similarly spaced, such that the clipping formations are receivable in the recesses;

with the spigot-like elements being of a suitable resiliently flexible material to be a clip-fit in the end portions such that a desired number of hose lengths may be coupled together by means of the connectors.

The recesses may be defined by apertures.

The spigot-like elements may be resiliently deformable so that the elements may be pressed into the members and the connectors, the elements deforming to allow the clipping formation(s) to enter the members and the connectors and engage the recesses to couple the element and member or connector together.

Each clipping formation may taper longitudinally, such that the thickness of each clipping formation increases away from the free end of the element, thereby to facilitate entry of each formation into the member or connector.

Each clipping formation may also taper circumferentially to permit uncoupling of the element and member or connector. Thus, if the member or connector and elements are twisted to cause relative rotation, the projecting formations will easily disengage their associated recesses to permit removal of

- 4 -

0223495

the element from the member or connector.

It will be appreciated that the element is preferably sufficiently deformable to permit clipping thereof into the member or connector but sufficiently rigid to resist normal forces that the hose will experience in use to stay coupled to the member or connector. The tolerances of the element and member or connector may also be such that when the hose is used with a pressurised fluid the element expands into sealing and locking engagement with the member or connector.

The elements may also each have a peripheral end bead to promote sealing.

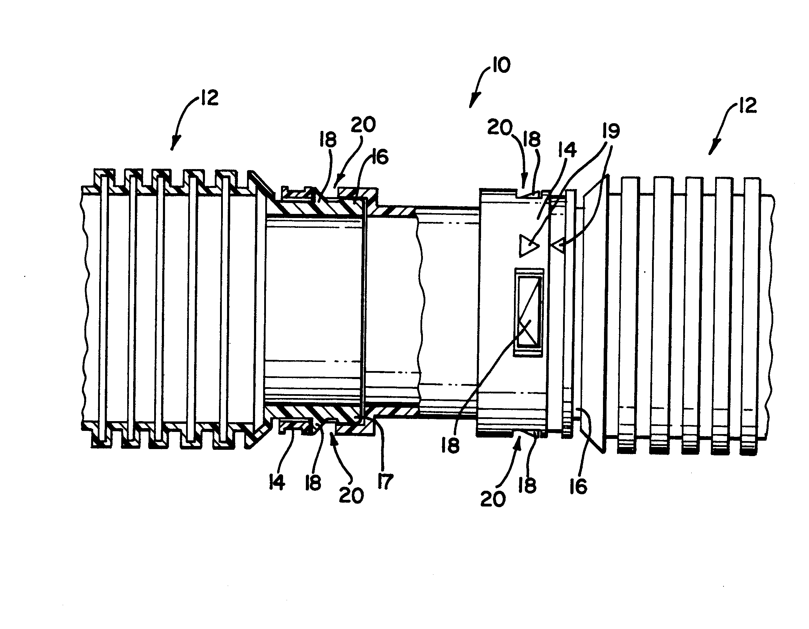

The invention is now described by way of an example, with reference to the accompanying drawing which shows, partly sectioned, two hoses, coupled together by a connector that form part of a hose system in accordance with the invention. Each hose and the connector constitutes a coupling arrangement in accordance with the invention.

Referring to the drawing, shown therein is a connector 10 for coupling together two lengths of hose 12. The connector 10 is tubular, defining a socket 14 at each end; spigot formations 16 at the ends of the lengths of hose 12 being receivable therein. The hose lengths 12 and the connector 10 form part of a hose system that comprises a number of the hose lengths 12 connected end-to-end by means of a number of the connectors 10.

Each spigot formation 16 has four outwardly projecting lugs 18, that are circumferentially aligned and are equally angularly spaced. The sockets 14 have complementary apertures 20 in which the lugs 18 are received. The lugs 18 taper longitudinally, increasing in thickness away from the free ends of the spigot formations 16 to facilitate insertion of the spigot formations 16 in the sockets 14. The inner ends of the lugs 18 are stepped to provide ledges which bear against the sides of the apertures 20 to retain the spigot formations 16 in the sockets 14. The lugs 18 are also tapered circumferentially so that the lugs 18 may be disengaged from the apertures 20 by twisting the spigot formation 16 in the connector 10. In the absence of such circumferential taper, the lugs 18 may be forcibly disengaged from the apertures 20, but only when the hoses 12 are not pressurised. At their free ends, the spigot formations 16 have peripheral beads 17 which engage the inner surfaces of the sockets 14 to promote sealing. The connector 10 and the spigot formations 16 have alignment marks 19 to align them in a predetermined manner.

The spigot formations 16 and the coupling 10 are of synthetic plastic materials, the former being sufficiently resiliently deformable to permit the spigot formations 16 to clip into the sockets 14 and still be water-tight. Preferably, they are sufficiently pliable for the spigot formations 16 to be expanded into sealing and locking engagement with the sockets 14 when the hoses 12 are pressurised.

By means of the invention, two hoses may be easily coupled and uncoupled in a cheap and simple manner.

CLAIMS

1.      A coupling arrangement for coupling hoses, which includes

a spigot-like element (16) that is substantially circular cylindrical and has a plurality of circumferentially spaced, radially outwardly projecting clipping formations (18), with the spigot element (16) having a mouth at its free end and with each clipping formation (18) having at its inner end a ledge which faces away from the mouth:  and

a socket-like member (14) in which the spigot-like element (16) is receivable and which has an internal circular cylindrical configuration slightly larger than the outer diameter of the spigot-like formation (16) so that the spigot-like formation (16) is a snug fit therein, with the socket-like member (14) having a plurality of recesses (20) in its inner surface in which the clipping formations (18) are receivable, there being a recess (20) for each clipping formation and with each recess (20) defining a shoulder against which the ledge of the associated clipping formation (18) bears; with the spigot-like element (16) being of a suitably resiliently flexible material for the spigot-like element to be a clip-fit in the socket-like member (14) such that the clipping formations (18) seat in the recesses (20).

2.    An arrangement as claimed in claim 1, in which each clipping formation (18) increases in thickness from its mouth side towards its ledge.

3.    An arrangement as claimed in claim 1 or 2, in which each clipping formation (18) tapers circumferentially.

0223495

4.    An arrangement as claimed in any preceding claim, in which each clipping formation (18) increases in thickness from its sides inwardly.

5.    An arrangement as claimed in any preceding claim, in which the recesses (20) are defined by apertures.

6.    An arrangement as claimed in any preceding claim, in which the spigot-like element (16) is a sufficiently snug fit in the socket-like member (14) and the element (16) is of a sufficiently deformable material for the element to expand in use, due to the pressure exerted thereon by a fluid under pressure therein, into sealing engagement with the member (14).

7.    An arrangement as claimed in any preceding claim, in which the spigot-like element (16) has a peripheral bead (17) at its mouth for promoting sealing between the element (16) and the member (14).

8.    A hose system which includes
a number of lengths of hose (12), each length having a spigot-like element (16) at both ends with each element (16) having a plurality of circumferentially spaced, radially outwardly projecting clipping formations (18);
a number of connectors (10), each connector being tubular and having a socket-like end portion (14) at its ends, each end portion (14) being slightly larger than the spigot-like elements (16) so that they are a snug fit therein, and each end portion having the same number of recesses (20) as the number of clipping formations (18) and similarly spaced, such that the clipping formations (18) are receivable in the recesses (20);
with the spigot-like elements (16) being of a suitable resiliently flexible material to be a clip-fit in the end portions (14) such that a desired number of hose lengths (12) may be coupled together by means of the connectors (10).

9.   A system as claimed in claim 8, in which the clipping formations (18) taper longitudinally, increasing in thickness inwardly from the ends of the hose lengths (12).

10.   A system as claimed in claim 8 or 9, in which the formations (18) taper circumferentially and increase in thickness from their sides inwardly.

11.   A system as claimed in any of claims 8 to 10, in which the clipping formations (18) terminate at their inner ends in perpendicular ledges.

12.   A system as claimed in any of claims 8 to 11, in which the recesses are defined by apertures.

13.   A system as claimed in any of claims 8 to 12, in which the lengths (12) of hose each have a peripheral bead (17) at each end for promoting sealing with its associated end portion (14).

0223495

European Patent
Office

EUROPEAN SEARCH REPORT

Application number

EP  86 30 8599

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 173 895  (PHILIPS GLOEILAMPENFABRIEKEN)  * Page 2, column 1, lines 23-62; figures 1,2 *  --- | 1 | F 16 L  37/08 |
| Y | FR-E-   77 516  (COMPAGNIE DE PONT-A-MOUSSON)  * Claim a; figures 1-4 * | 1 | |
| A | --- | 5 | |
| A | DE-A-2 806 588  (TETRA WERKE)  * Claim 1; figures 1-3 * | 1 | |
| A | * Figure 2 *  --- | 2-4 | |
| A | DE-A-3 329 933  (LICENTIA)  * Abstract; figures 1-4 *  ----- | 1 | TECHNICAL FIELDS SEARCHED (Int. Cl.4)  F 16 L  37/08 |

The present search report has been drawn up for all claims

| Place of search | Date of completion of the search | Examiner |
|---|---|---|
| THE HAGUE | 30-01-1987 | BARTSCH A.W. |